# EUROPÄISCHE PATENTANMELDUNG

(11) **EP 1 260 728 A1**
(43) Veröffentlichungstag der Anmeldung: **27.11.2002**
(21) Anmeldenummer: 02004915.1
(22) Anmeldetag: 05.03.2002
(51) Int. Cl.: F16D 65/12

(54) **Zweiteilige Bremsscheibe mit Schraubverbindung**

(30) Priorität: 23.05.2001 DE 10125116
(71) Anmelder: DaimlerChrysler AG, 70567 Stuttgart (DE)
(72) Erfinder: Muharrem, Er, 71254 Ditzingen-Hirschlanden (DE); Staudenecker, Peter, 71032 Böblingen (DE)

(57) **Zusammenfassung**

Die Erfindung betrifft eine zweiteilige Bremseinheit, mit mindestens einem Reibring (1), und einem Halteteil (2), die jeweils einen Befestigungsring (6,7) aufweisen, welche überlappend zueinander angeordnet sind und Durchgangsbohrungen (8) aufweisen durch die Befestigungsschrauben (3) geführt sind. Die Bremseinheit zeichnet sich dadurch aus, dass Befestigungsschrauben als Passschrauben mit einem Schaft (9) formschlüssig die Durchgangsbohrungen durchdringen, die Befestigungsschrauben am Schraubenfuß ein Gewinde aufweisen, das vor der Durchgangsbohrung endet, das Gewinde mit einer Mutter versehen ist, die bis zum Gewindeende angezogen ist und ein Distanzelement (5) den Zwischenraum zwischen der Mutter und dem Befestigungsring überbrückt.

## Beschreibung

Die Erfindung betrifft eine zweiteilige Bremsscheibe nach dem Oberbegriff des Patentanspruch 1.

Ein überwiegender Teil der in Kraftfahrzeigen eingesetzten Bremsscheiben sind einteilig aus Graugussmaterial hergestellt. Dieses Material weist eine, für viele Fälle ausreichende thermische Beständigkeit und Verschleißbeständigkeit auf. Ein wesentlicher Nachteil des Graugusses besteht dennoch in seinem hohen spezifischen Gewicht. Das führt zu hohen ungefederten Massen im Fahrwerk, die den Federungskomfort negativ beeinflussen. Ferner kommen Bremsscheiben aus Grauguss bei hochmotorisierten Fahrzeugen oftmals an die Grenzen der thermischen Belastbarkeit, was zur Gewährleistung der Sicherheitsansprüche einen hohen konstruktiven Aufwand verursacht.

In den letzen Jahren sind mehrere alternative Bremsen-Werkstoffe entwickelt worden wie sie z. B. in der DE 197 10 105 A1 oder der US 5 535 857 beschrieben werden. Hierbei handelt es sich um faserverstärkte Keramiken, metallinfiltrierte Keramiken oder Metall-Matrix-Composites. Derartige Werkstoffe weisen zwar bessere thermische Eigenschaften und bessere Verschleißeigenschaften auf als der herkömmliche Grauguss, ihre Formgebung gestaltet sich jedoch aufwendiger und somit teurer. Aus diesem Grund ist es zweckmäßig, die Bremseinheit mehrteilig, insbesondere zweiteilig in Form eines Reibrings und eines Halteteils auszugestalten.

Die DE 44 46 017 C2 und die DE 197 27 333 A1 beschreiben zweiteilige Bremsscheiben, wo ein Halteteil und eine Reibring miteinander durch Verschraubung verbunden sind. Zu diesem Zweck weisen der Reibring und das Halteteil Befestigungsringe auf, die sich überlappen und mit Bohrungen versehen sind. In den Bohrungen sind Hülsen eingelassen, in die zur Befestigung der Schrauben ein Gewinde eingedreht ist.

Ein Nachteil dieser Verbindung besteht darin, dass die Schrauben stark vorgespannt sind, was zu Setzerscheinungen der Schraubverbindung führen kann, zudem kann das axiale Spiel des Reibrings bei dieser starren Verbindung nur unzureichend gepuffert werden. Ferner ist die Herstellung der aufwendig bearbeiteten Hülsen und die Montage äußerst kostenintensiv.

Aufgabe der Erfindung ist es demnach, eine Schraubverbindung für zweiteilige Bremsscheiben bereitzustellen, bei der die Schrauben nahezu vorspannungsfrei befestigt sind, ein axiales Spiel des Reibrings ausgeglichen werden kann und das gegenüber dem Stand der Technik kostengünstiger herzustellen ist.

Die Lösung der Aufgabe besteht in den Merkmalen des Patentanspruchs 1.

Die erfindungsgemäße Lösung nach Patentanspruch 1 besteht in einer zweiteiligen Bremsscheibe, mit einem Reibring und einem Halteteil, die jeweils mindestens einen Befestigungsring aufweisen. Die Befestigungsringe des Reibrings und des Halteteils überlappen derart, dass Bohrungen, die in den Befestigungsringen angeordnet sind übereinander liegen.

Befestigungsschrauben, die durch die Bohrungen geführt sind weisen einen Schaft zur passgenauen Zentrierung in der Bohrung auf (Passschrauben). Am Schraubenfuß befindet sich ein Gewinde, das vor der Bohrung am Schaft endet. Eine Mutter ist bis zum Ende des Gewindes angezogen und gegen unbeabsichtigtes Lösen gesichert. Den Spielraum zwischen Mutter und Befestigungsring füllt ein Distanzelement aus.

An der Schraubverbindung liegt demnach nahezu keine Vorspannkraft an. Die Passschrauben werden auf Scherung belastet und sind entsprechend dimensioniert. Die Passschrauben haben in den Bohrungen soviel Spiel, wie für die ungehinderte Wärmeausdehnung des. Reibrings erforderlich ist. Das Spiel wird an Hand der Ausdehnungskoeffizienten der verwendeten Werkstoffe für jede konstruktive Auslegung berechnet.

Ein weiterer Vorteil der erfindungsgemäßen Konstruktion besteht darin, dass sich der Reibring frei vom Halteteil in radialer Richtung ausdehnen kann. Dadurch wird ein Schirmen der Bremsscheibe (axiales Verbiegen des Reibrings gegenüber dem Halteteil) deutlich reduziert. Dies wirkt sich positiv auf die Komforteigenschaften der Bremseinheit hinsichtlich dem Ansprechverhalten der Bremse, dem gleichbleibenden Pedalweg bei kalter und heißer Bremse und hinsichtlich eines verringerten Bremsscheibenrubbelns aus.

In bevorzugter Weise ist das Distanzelement als Tellerfeder oder Spannscheibe ausgestaltet. Somit können axiale Ausdehnungen des Reibrings vorteilhaft abgefedert werden (Anspruch 2).

Ein Vorteil der zweiteiligen Bremseinheit besteht darin, dass durch Verwendung geeigneter Werkstoffe mit geringem spezifischen Gewicht die ungefederte Masse des Fahrwerks reduziert werden kann, was zu einer Erhöhung des Federungskomforts führt. Als Werkstoffe für das Halteteil sind insbesondere Aluminium oder andere Leichtmetalle -wie Titan- oder deren Legierungen sowie hochfeste Stahlbleche geeignet (Anspruch 3).

Eine weitere Massereduzierung sowie eine Erhöhung der Verschleißbeständigkeit wird durch den Einsatz von Metall-Keramik-Verbundwerkstoffen für den Reibring erzielt. Dies gilt insbesondere für neuartige Verbundwerkstoffe auf der Basis von Aluminiumoxid und intermetallischen Phasen, die zusätzlich eine hohe thermische Beständigkeit aufweisen. Ferner sind als Materialien faserverstärkte Keramiken auf Silizium- und Kohlenstoff-Basis, sowie partikelverstärkte Leichtmetalle vorteilhaft (Anspruch 4).

Weitere vorteilhafte Ausgestaltungen der Erfindung sind in der folgenden Spezialbeschreibung angegeben.

Es zeigen:
- **Fig. 1**: eine Schnittdarstellung durch eine erfindungsgemäße zweiteilige Bremsscheibe sowie deren Verschraubung und
- **Fig. 2**: eine dreidimensionale Darstellung der erfindungsgemäßen Bremsscheibe mit Verschraubung.

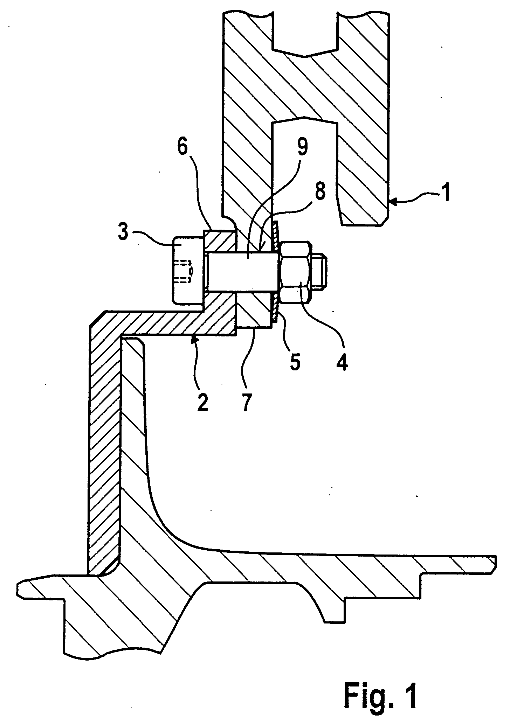

Ein Reibring 1 und ein Halteteil 2 in Fig. 1 weisen jeweils einen Befestigungsring 6 und 7 auf, die überlappend angeordnet sind. Im Überlappungsbereich der Befestigungsringe 6 und 7 sind Bohrungen 8 eingebracht. In den Bohrungen befinden sich Passschrauben 3, mit einem Schaft 9, der in den Bohrungen 8 zentriert ist. Das Spiel des Schaftes 9 in der Bohrung 8 ist so ausgelegt, dass eine ungehinderte Wärmeausdehnung des Reibrings 1 möglich ist, so dass auch bei hohen Temperaturen keine Schädigung der Verbindung auftritt.

Die Länge des Schaftes 9 der Passschraube 3 ist so bemessen, das die Mutter 4 bis zum Anliegen an dem Schaft 9 angezogen wird. Die Wölbung einer Tellerfeder 5 ist ausgelegt, dass sie mit der überstehenden Schaftlänge korrespondiert und eine definierte Kraft auf die Befestigungsringe 6 und 7 ausübt.

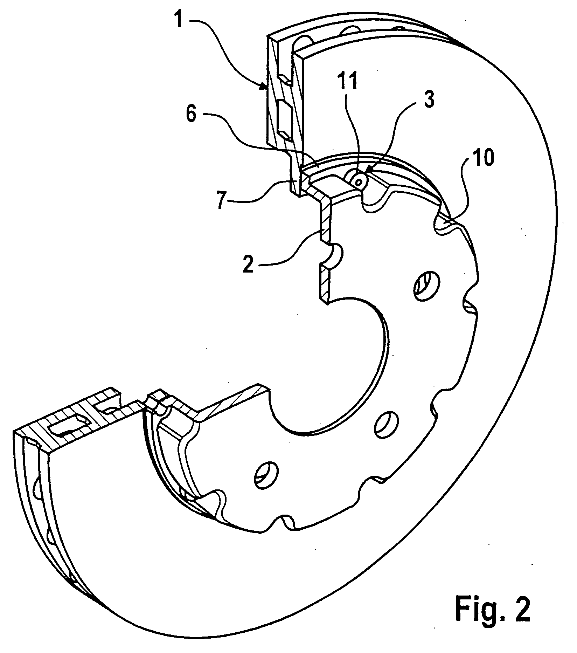

Die Anzahl der Schrauben, deren Anordnung an der Bremseinheit und ihre Auslegung kann an Hand der mechanischen Belastungen, die auf die Bremseinheit wirken, variiert werden. In Fig. 2 ist eine dreidimensionale Darstellung einer erfindungsgemäßen Bremseinheit dargestellt. Der Befestigungsring 6 am Halteteil 2 ist hier sehr schmal ausgelegt, an den Befestigungsstellen sind im Halteteil 2 radiale Mulden 10 ausgebildet, die Raum für Schraubenköpfe 11 bilden. Tellerfedern 5 sind - in Fig. 2 nicht sichtbar - reibringseitig zwischen dem Befestigungsring 7 und den Mutter (nicht sichtbar) angebracht. Eine Anbringung der Tellerfedern oder Spannscheiben am Schraubenkopf 11 ist ebenfalls möglich.

Das in Fig. 2 dargestellte topfförmige Halteteil 2 kann zu Gunsten einer direkten Anbindung an einer Radnabe entfallen. Die Radnabe fungiert dann als Halteteil. Durch diese Maßnahme wird zusätzlich ungefederte Masse im Fahrwerk eingespart, was den Federungskomfort erhöht.

## Patentansprüche

1. Zweiteilige Bremseinheit, mit mindestens einem Reibring und einem Halteteil, die jeweils einen Befestigungsring aufweisen, wobei Reibring und Halteteil überlappend zueinander angeordnet sind und Durchgangsbohrungen aufweisen, durch die Befestigungsschrauben geführt sind,
**dadurch gekennzeichnet, dass**
• die Befestigungsschrauben als Passschrauben mit einem Schaft formschlüssig die Durchgangsbohrungen durchdringen,
• die Befestigungsschrauben am Schraubenfuß ein Gewinde aufweisen, das außerhalb der Durchgangsbohrung endet,
• das Gewinde mit einer Mutter versehen ist, die bis zum Gewindeende angezogen ist
• und ein Distanzelement den Zwischenraum zwischen der Mutter und dem Befestigungsring überbrückt.

2. Bremseinheit nach Anspruch 1,
**dadurch gekennzeichnet, dass**
das Distanzelement eine Tellerfeder oder eine Spannscheibe ist.

3. Bremseinheit nach einem der vorhergehenden Ansprüche,
**dadurch gekennzeichnet, dass**
das Halteteil aus einer Leichtmetalllegierung besteht.

4. Bremseinheit nach Anspruch 1 oder 2,
**dadurch gekennzeichnet, dass**
der Reibring aus einem Metall-Keramik-Verbundwerkstoff besteht.
